# EUROPÄISCHE PATENTSCHRIFT

(11) **EP 3 310 155 B1**
(45) Veröffentlichungstag und Bekanntmachung des Hinweises auf die Patenterteilung: **31.07.2019**
(21) Anmeldenummer: 15729486.9
(22) Anmeldetag: 17.06.2015
(51) Int. Cl.: A01J 7/02, A01J 11/02, A01J 5/04

(54) **MILCHABSCHEIDEVORRICHTUNG**
MILK SEPARATION DEVICE
DISPOSITIF DE SÉPARATION DE LAIT

(43) Veröffentlichungstag der Anmeldung: 25.04.2018
(73) Patentinhaber: GEA Farm Technologies GmbH, 59199 Bönen (DE)
(72) Erfinder: KRONE, Otto, 49479 Ibbenbüren (DE); VARVICK, Gertjan, 7551 AC Hengelo (NL)
(74) Vertreter: Kleine, Hubertus
(86) Internationale Anmeldenummer: PCT/EP2015/063609
(87) Internationale Veröffentlichungsnummer: WO 2016/202382

(56) Entgegenhaltungen:
- EP-A2- 0 164 185
- BE-A- 661 573
- US-A- 1 972 144

## Beschreibung

Die Erfindung betrifft eine Milchabscheidevorrichtung für eine Melkanlage zum Melken, insbesondere zum automatisierten Melken, von milchgebenden Tieren nach dem Oberbegriff des Anspruchs 1.

Melkanlagen, wie sie beispielsweise zum automatischen Melken von milchgebenden Tieren, wie z.B. Kühe, Schafe, Ziegen, verwendet werden, weisen Milchabscheidevorrichtungen auf, siehe z.B. US 1,972,144 A. Ein automatischer Melkvorgang kann mittels so genannter Melkroboter durchgeführt werden. Eine derartige Milchabscheidevorrichtung trennt einen Flüssigkeitsbereich von einer Luft- (Vakuum-) Versorgung. Dabei wird so genannter Milchschaum daran gehindert, in die Vakuumversorgung einzudringen. Der Milchschaum bildet sich aufgrund von Milch-/Luftgemisch durch eintretende Luft ins Milchsystem (z.B. gewollt über Düsen zum besseren Abtransport der Milch oder ungewollt durch Leckluft zwischen den Melkbechern und Zitzen). Weiterhin kann die Milchschaumbildung auch durch die Fütterung der Tiere beeinflusst werden.

Als nachteilig wird es angesehen, dass der gebildete Milchschaum in der Milchabscheidevorrichtung volumenmäßig so ansteigt, dass er über eine Überlaufsicherung der Vakuumversorgung abgesaugt wird und so Milchverluste entstehen können. Diese Gefahr ist größer, je kompakter das Abscheidegefäß aufgebaut ist. Bei Roboteranlagen ist es das Ziel, möglichst kompakte Gefäße einzusetzen. Daher ist eine effektive Schaumverhinderung unerlässlich.

Aufgrund der immer weiter steigenden Anforderungen, insbesondere nach hohen Durchsatzzahlen, kontinuierlichem und wartungsarmen Betrieb, sowie nach einem effizienteren Milchertrag bei gleichzeitigem kompakten Aufbau, besteht ein ständiger Bedarf für verbesserte Milchabscheidevorrichtungen.

Vor diesem Hintergrund besteht die Aufgabe der Erfindung darin, eine verbesserte Milchabscheidevorrichtung zu schaffen, die gleichzeitig kompakt ist, Milchschaumbildung in bedeutendem Maße verhindert und milchschonend ist, d.h. eine Bildung von freien Fettsäuren (FFA, Free Fatty Acids) erheblich reduziert.

Diese Aufgabe wird durch eine Milchabscheidevorrichtung mit den Merkmalen des Anspruchs 1 gelöst.

Eine erfindungsgemäße Milchabscheidevorrichtung für eine Melkanlage zum Melken, insbesondere zum automatisierten Melken, von milchgebenden Tieren, umfasst einen Körper mit einem Einlassanschluss und einem Auslassanschluss und einen Deckel mit einem Anschluss an eine Vakuumleitung. Der Körper weist einen nach innen hervorstehenden Balkonabschnitt an einem Innenumfang auf, wobei der Balkonabschnitt umlaufend schraubenlinienförmig mit einem Steigungswinkel gegen die Erdanziehungskraft ansteigend eine Rampe bildet.

Der umlaufend schraubenlinienförmige Balkonabschnitt mit einem Steigungswinkel bildet gegen die Erdanziehungskraft ansteigend eine Rampe, wodurch es vorteilhaft ermöglich wird, dass eine Bildung von Milchschaum im Gegensatz zu derzeitigen Lösungen erheblich verringert wird.

Auf diese Weise ist es möglich, dass ein Übersaugen von zuviel Milchschaum in eine Überlaufsicherung mit den damit verbundenen Nachteilen von Milchverlusten in erheblichem Maße reduziert werden kann.

Ein besonderer Vorteil der erfindungsgemäßen Milchabscheidevorrichtung besteht darin, dass ihr Raumbedarf zu derzeitigen Ausführungen verkleinert werden kann, wobei gleichzeitig ein Milchdurchsatz beibehalten und eine Milchschaumbildung in bedeutendem Maß reduziert werden kann.

Ein weiterer Vorteil besteht dabei darin, dass ein Ansaugen von Milchschaum in die Vakuumerzeugung, z.B. in eine Vakuumpumpe, verhindert werden kann. Dadurch verringern sich hygienische Probleme, sowie die Wartungs- und Reinigungskosten.

Zusätzlich wird eine Verwirbelung der Milch bedeutend vermieden, dass sich so genannten freien Fettsäuren (FFA, Free Fatty Acids) nicht bilden können.

Die Milch wird in die Milchabscheidevorrichtung eingesaugt und fließt aus dem Einlass auf den Balkonabschnitt. Durch die Zentrifugalkraft wird die Milch nach außen an die Behälterwand gedrückt und bleibt somit weitestgehend auf dem Balkon. Da der Balkonabschnitt ansteigt und die Milch gegen die Schwerkraft weiterfließt, wird die Strömungsgeschwindigkeit der Milch verringert. Das heißt es wird ihr dadurch Energie zur möglichen Bildung von Milchschaum entzogen.

In einer Ausführung ist der Balkonabschnitt sichelförmig ausgebildet. Dies ist vorteilhaft, da so die Milch nach Verringerung ihrer Strömungsgeschwindigkeit sanft an den Innenwänden der Milchabscheidevorrichtung in einen Sammelabschnitt fließen kann. Der Balkonabschnitt weist einen Übergangsabschnitt, einen Balkon als einen mittleren Abschnitt und einen Balkonrand auf. Der Übergangsabschnitt und der Balkonrand sind vorteilhaft abgerundet, wodurch Wirbelbildung der Milch vermieden wird.

In einer Ausführung ist vorgesehen, dass eine Balkonbreite des Balkonabschnitts im ansteigenden Verlauf des Balkonabschnitts in Abhängigkeit eines Umfangswinkels geringer wird. Auf diese Weise kann der Milchfluss vorteilhaft verlangsamt und beruhigt werden, so dass eine Milchschaumbildung erheblich reduziert wird. Je mehr die Strömungsgeschwindigkeit der Milch abnimmt und der Balkon schmaler wird, umso mehr Milch fließt nach unten ab. Außerdem wird so gewährleistet, dass sich einströmende Milch nicht mit nachfolgender einströmender Milch verwirbelt.

Für einen möglichst vorteilhaft wirbelfreien oder zumindest wirbelarmen Einlauf der Milch in den Milchabscheider ist der Einlassanschluss tangential an dem Körper und tangential zu dem Balkonabschnitt angebracht, wobei der Einlassanschluss mit einem Innenraum des Körpers durch einen Einlauf kommuniziert, wobei eine Unterkante des Einlaufs mit einer Oberseite des Balkons abschließt oder darüber liegt.

Eine weitere Ausführung sieht vor, dass der Körper eine zentrale Achse aufweist und einen Einlaufabschnitt mit dem tangentialen Einlassanschluss, einen Zwischenabschnitt, einen Sammelabschnitt und einen Bodenabschnitt mit dem Auslassanschluss umfasst. Dies ist vorteilhaft, da die Milch über die Innenwände dieser Abschnitte so beruhigt in den Sammelabschnitt fließt, dass die gesammelte Milch im Sammelabschnitt keine Drehbewegungen mehr aufweist.

In einer weiteren Ausführung weist der Einlaufabschnitt einen Wandabschnitt mit einem Flansch zur Zusammenwirkung mit dem Deckel und den Übergangsabschnitt auf. Dies ergibt einen vorteilhaft kompakten Aufbau.

In einer noch weiteren Ausführung ist vorgesehen, dass die Milchabscheidevorrichtung mit einem Niveausensor zur Erfassung eines Füllstands von gesammelter abgeschiedener Milch ausgerüstet ist. Damit kann ein Füllstand der Milch erfasst und mit dieser Information ein gesteuerter Abfluss bzw. ein gesteuertes Abpumpen der Milch ermöglicht werden. Auf diese Weise wird vorteilhaft erreicht, dass das Niveau der Milch vollständig unterhalb des Balkons bleibt, um die Funktion des Balkons zu gewährleisten.

Beispielsweise kann durch den von dem Niveausensor erfassten Füllstand eine Milchpumpe derart gesteuert werden, dass die Milch den bestimmten Füllstand unterhalb des Balkons nicht überschreitet und gleichzeitig ein möglichst kontinuierliches Abpumpen der Milch erfolgen kann.

Hierbei ist es besonders vorteilhaft, wenn die Milchpumpe mittels eines frequenzgesteuerten Motors mit dadurch veränderlicher Drehzahl gesteuert wird.

In einer anderen Ausführung ist der Niveausensor in einem Winkel zu einer Achse der Milchabscheidevorrichtung angeordnet, wobei dieser Winkel in einem Bereich von 10° bis 25°, bevorzugt 18° bis 22°, liegt. Damit wird ein einfacher und kompakter Aufbau ermöglicht.

Weiterhin ist es vorgesehen, dass der Niveausensor in dem Deckel befestigt ist. Dies ist ein vorteilhaft kompakter Aufbau.

In einer Ausführung kann der Steigungswinkel einen konstanten Wert aufweisen.

In einer alternativen Ausführung kann der Steigungswinkel unterschiedliche Werte aufweisen, die sich kontinuierlich oder in Stufen ändern.

Damit ergibt sich der Vorteil einer Anpassung an unterschiedliche Randbedingungen.

Wenn die Milchabscheidevorrichtung mit mindestens einem Reinigungsanschluss versehen ist, kann sie vorteilhaft einfach an ein vorhandenes Reinigungssystem angeschlossen werden. Hierbei ist es besonders vorteilhaft, wenn der mindestens eine Reinigungsanschluss in dem Deckel angeordnet ist, da so der gesamte Innenraum der Milchabscheidevorrichtung von oben einschließlich des Niveausensors vollständig gereinigt werden kann, wodurch sich Reinigungszeiten verkürzen.

Weitere Vorteile und Einzelheiten gehen aus dem in den Figuren der Zeichnung dargestellten Ausführungsbeispiel hervor. Hierbei zeigen:
- Figur 1: eine schematische Blockdarstellung einer beispielhaften Melkanlage mit einer erfindungsgemäßen Milchabscheidevorrichtung;
- Figuren 2-3: schematische Seitendarstellungen eines Ausführungsbeispiels eines Körpers der erfindungsgemäßen Milchabscheidevorrichtung;
- Figuren 3a-3b: schematische Radialschnittdarstellungen des Körpers nach Figuren 2-3;
- Figuren 4-5: schematische perspektivische Innenansichten des Körpers nach Figur 2 und 3;
- Figur 6: eine Draufsicht einer schematischen Innenansicht des Körpers nach Figur 2 und 3;
- Figur 7-8: schematische Schnittansichten der erfindungsgemäßen Milchabscheidevorrichtung; und
- Figur 9: eine vergrößerte Darstellung des Bereichs IX aus Figur 8.

Die Begriffe "oben", "unten", "links", "rechts" beziehen sich auf die jeweilige Anordnung in den Figuren.

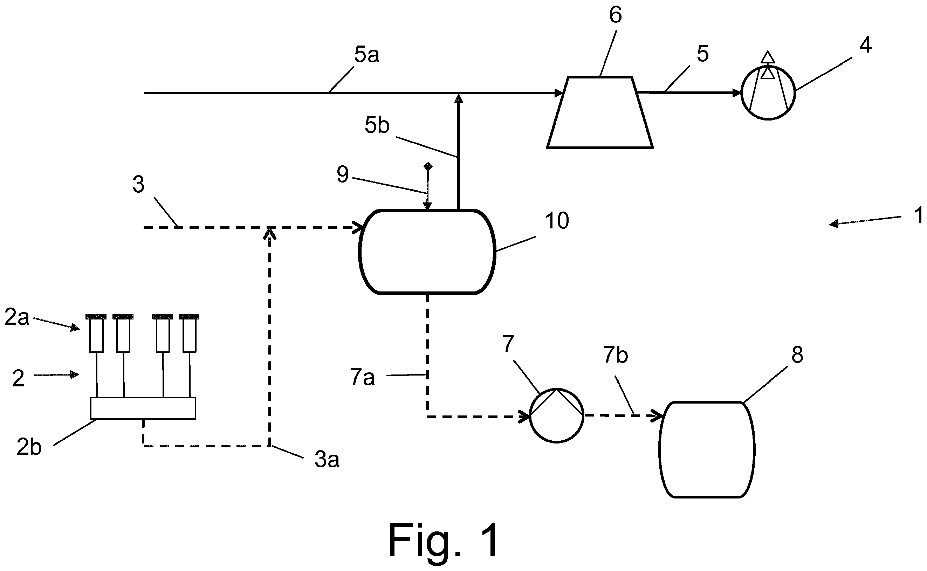

Figur 1 zeigt eine schematische Blockdarstellung einer beispielhaften Melkanlage 1 mit einer erfindungsgemäßen Milchabscheidevorrichtung 10.

Die Melkanlage 1 umfasst hier ein Melkzeug 2 mit Zitzenbechern 2a, eine Melkleitung 3, einen Vakuumerzeuger 4, eine Überlaufsicherungseinheit 6, eine Milchpumpe 7, einen Milchtank 8 und die Milchabscheidevorrichtung 10.

Die Zitzenbecher 2a sind mit einem Sammelstück 2b verbunden. Das Sammelstück 2b ist über einen Melkschlauch 3a an der Melkleitung 3 angeschlossen. Die Melkleitung 3 mündet in die Milchabscheidevorrichtung 10, welche sowohl mit der Hauptvakuumleitung 5 als auch mit der Milchpumpe 7 in Verbindung steht.

Der Vakuumerzeuger 4 ist z.B. eine Vakuumpumpe, welche an die Hauptvakuumleitung 5 angeschlossen ist. Die Hauptvakuumleitung 5 ist über die Überlaufsicherungseinheit 6 mit einer Vakuumleitung 5a verbunden, an welche die Milchabscheidevorrichtung 10 über eine so genannte Luftleitung 5b angeschlossen ist.

Die Milchpumpe 7 steht mit der Milchabscheidevorrichtung 10 über eine Milchzulaufleitung 7a in Verbindung und ist mit einer Milchdruckleitung 7b an den Milchtank 8 angeschlossen.

Bei einem Melkvorgang sind die Zitzenbecher 2a an Zitzen eines nicht gezeigten zu melkenden Tieres angelegt. Die Vakuumleitung 5a ist mit einem von dem Vakuumerzeuger 4 erzeugten Vakuum über die Überlaufsicherungseinheit 6 und die Hauptvakuumleitung 5 beaufschlagt. Die Zitzenbecher 2a sind über das Sammelstück 2b, den Melkschlauch 3a, die Melkleitung 3, die Milchabscheidevorrichtung 10 und die Luftleitung 5b mit der Vakuumleitung 5a verbunden. Mittels des Vakuums wird die von den Zitzenbechern 2a des Melkzeugs 2 gemolkene Milch in die Milchabscheidevorrichtung 10 befördert.

Die Funktion der Milchabscheidevorrichtung 10 besteht darin, die gemolkene Milch von der Vakuumversorgung zu trennen, wobei gleichzeitig eine Bildung von Milchschaum unterdrückt und zudem eine Bildung von freien Fettsäuren (FFA = Free Fatty Acids) durch Verwirbelung vermieden wird.

Dabei sammelt sich die gemolkene Milch in der Milchabscheidevorrichtung 10 in einem unteren Flüssigkeitsbereich derselben und wird über die Milchzulaufleitung 7a an die Milchpumpe 7 geleitet. Die Milchpumpe 7 pumpt die so erhaltene Milch über die Milchdruckleitung 7b in den Milchtank 8.

Die Überlaufsicherungseinheit 6 dient dazu, ein Ansaugen von Milchschaum aus der Milchabscheidevorrichtung 10 in den Vakuumerzeuger 4 zu verhindern und so umfangreiche Reinigungsmaßnahmen desselben auszuschließen.

Die Milchabscheidevorrichtung 10 ist hier zudem mit einem Reinigungsanschluss 9 versehen, durch welchen Reinigungsmittel und/oder Spülmittel zur Reinigung der Milchabscheidevorrichtung 10 zugeführt werden können. Dies wird hier aber nicht weiter erläutert.

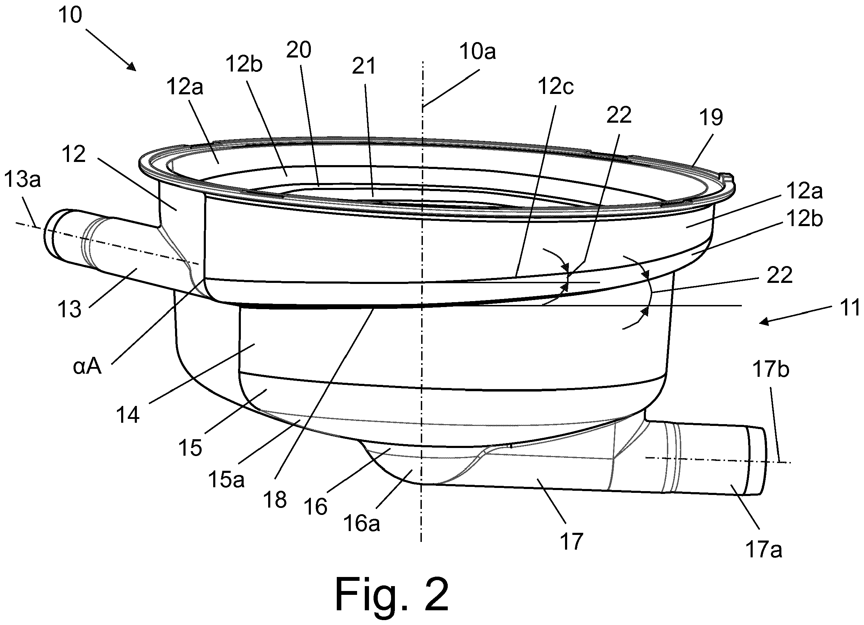

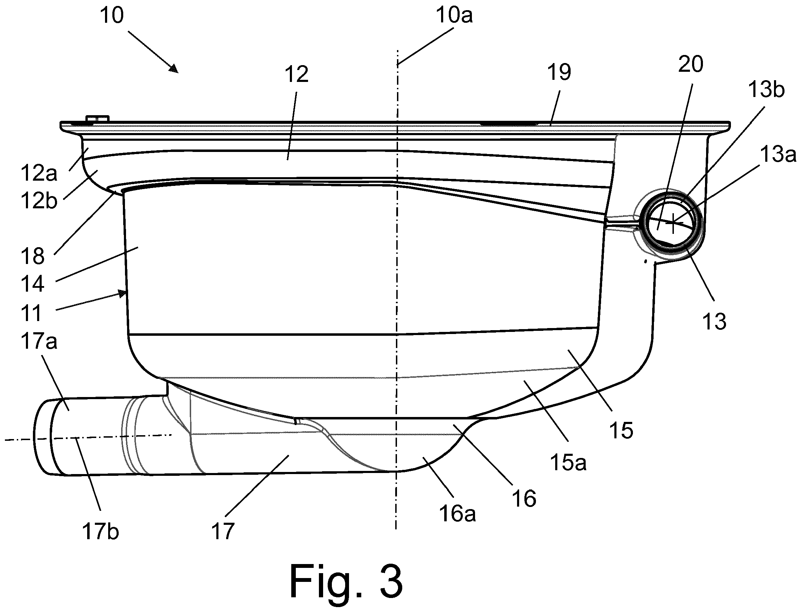

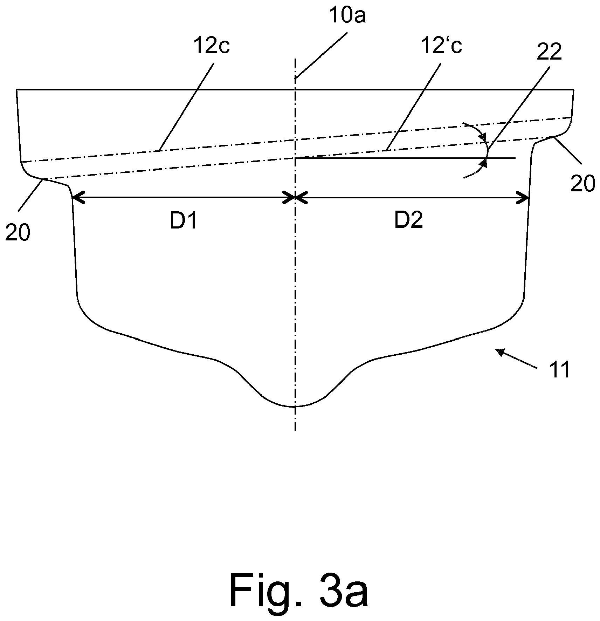

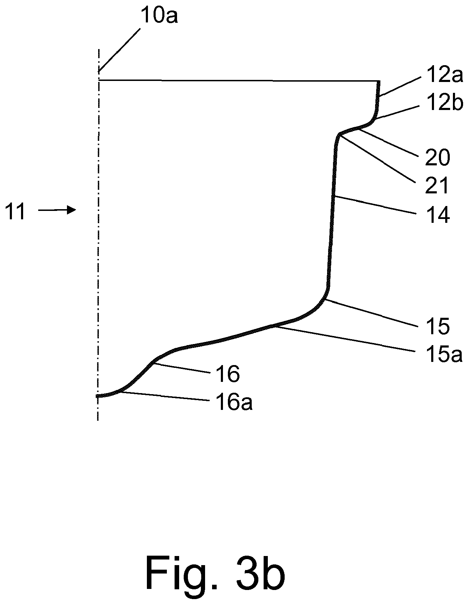

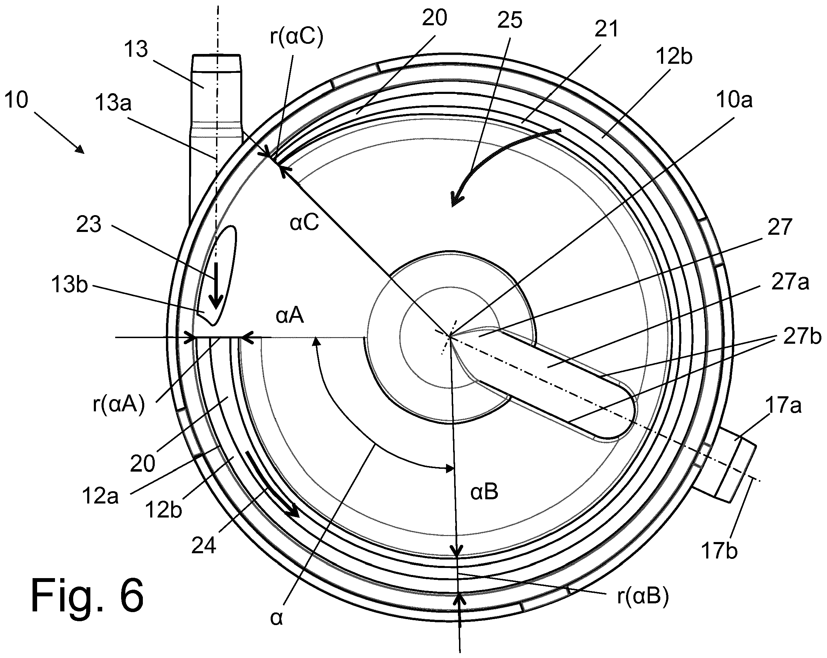

In den Figuren 2 und 3 sind schematische Seitendarstellungen eines Ausführungsbeispiels eines Körpers 11 der erfindungsgemäßen Milchabscheidevorrichtung 10 dargestellt. Figuren 3a und 3b zeigen schematische Radialschnittdarstellungen des Körpers 11 nach Figuren 2-3. Figur 6 stellt eine Draufsicht einer schematischen Innenansicht des Körpers nach Figur 2 und 3 dar.

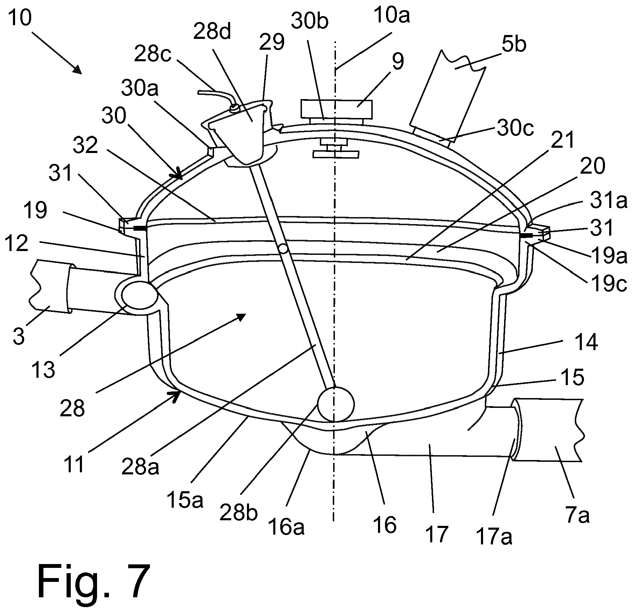

Die Milchabscheidevorrichtung 10 weist einen Körper 11 und einen Deckel 30 (siehe Figur 7) auf. Im Folgenden wird zunächst der Körper 11 beschrieben, wobei der Deckel 30 im Zusammenhang mit Figur 7 weiter unten erläutert wird.

Der Körper 11 der Milchabscheidevorrichtung 10 weist eine zentrale Achse 10a auf und umfasst einen Einlaufabschnitt 12 mit einem tangentialen Einlassanschluss 13, einen Zwischenabschnitt 14, einen Sammelabschnitt 15 und einen Bodenabschnitt 16 mit einem Auslassanschluss 17.

Der Begriff "nach außen" bedeutet von der Achse 10a weg weisend, wobei unter dem Begriff "nach innen" zu der Achse 10a hin weisend zu verstehen ist.

Der Einlaufabschnitt 12 besteht aus einem Wandabschnitt 12a, an dessen unterem Ende sich ein Übergangsabschnitt 12b anschließt. Der Wandabschnitt 12a ist nach Art eines Kegelstumpfmantels leicht nach unten hin, d.h. zu dem Übergangsabschnitt 12b hin, verjüngt.

An dem oberen Ende des Einlaufabschnitts 12, d.h. des Wandabschnitts 12a, ist ein Flansch 19 angeformt, welcher zur Verbindung mit dem Deckel 30 dient und unten noch näher erläutert wird.

Das untere Ende des Wandabschnitts 12a ist in Form einer gedachten Schraubenlinie 12c mit einem Steigungswinkel 22 ausgebildet und mit dem Übergangsabschnitt 12b verbunden. Der Übergangsabschnitt 12b verläuft demgemäß auch in Form der gedachten Schraubenlinie 12c.

Die Schraubenlinie 12c beginnt an der Verbindung des tangentialen Einlassanschlusses 13 mit dem Einlaufabschnitt 12. Diese Stelle ist in der Figur 2 mit dem Bezugszeichen αA angegeben (siehe Figur 6). Hierbei wird α als Umlaufwinkel um die Achse 10a bezeichnet. In der in Figur 6 gezeigten Draufsicht wird der Umlaufwinkel α sich im Gegenuhrzeigersinn öffnend betrachtet. Die Schraubenlinie 12c verläuft von ihrem Beginn in Richtung des oberen Endes des Einlaufabschnitts 12 ansteigend und endet nach einem Umlauf von etwa 330° an der gegenüberliegenden Verbindung des tangentialen Einlassanschlusses 13 mit dem Einlaufabschnitt 12 in dem Umlaufwinkel αC (siehe Figur 6).

Der Übergangsabschnitt 12b bildet einen nach innen hervorstehenden Kragen, der zur Innenseite des Körpers 11 weist und als Balkonabschnitt 18 bezeichnet wird. Dieser so nach innen hervorstehende Balkonabschnitt 18 ist mit dem unteren Ende des Wandabschnitts 12a hier über einen gerundeten Bereich des Übergangsabschnitts 12 verbunden. Dieser Balkonabschnitt 18 weist den Übergangsabschnitt 12b, einen mittleren Abschnitt, der hier als Balkon 20 bezeichnet wird, und einen Balkonrand 21 auf.
Der Balkonabschnitt 18 mit dem Balkon 20 verläuft auf die oben angegeben Weise wie der Übergangsabschnitt 12b am Innenumfang des Einlaufabschnitts 12 schraubenlinienförmig gemäß der Schraubenlinie 12c. Dabei bildet der Balkonabschnitt 18 mit dem Balkon 20 eine umlaufend ansteigende Rampe mit dem Steigungswinkel 22. Dabei verläuft der Umlaufwinkel α von αA=0° bis etwa αC=330° um die Achse 10a im Gegenuhrzeigersinn. Diese Werte sind nur beispielhaft angegeben.

Eine Balkonbreite r(α) des Balkons 20 ist abhängig von dem Umlaufwinkel α. Die Balkonbreite r(α) weist ihren größten Wert bei αA=0° und ihren kleinsten Wert bei etwa αC=330° auf. Die Balkonbreite r(α) verringert sich bei ansteigendem Umlaufwinkel α. Mit anderen Worten, der Balkon 20 wird immer schmaler, je weiter er ansteigt. Der Balkon 20 weist dabei die Gestalt einer Sichel auf.

Der Einlassanschluss 13 weist eine Einlaufachse 13a auf und ist an der Stelle des Einlaufabschnitts 12 angebracht, an welcher die Schraubenlinie 12c beginnt. An dieser Stelle weist eine Länge des Einlaufabschnitts 12 in Richtung der Achse 10a den größten Wert auf, da hier die Schraubenlinie 12c beginnt. Der Einlassanschluss 13 ist tangential an der Wand des Einlaufabschnitts 12 angebracht, wobei die Einlaufachse 13a tangential zu einer gedachten gekrümmten Mittellinie des Balkons 20 verläuft. Ein Einlauf 13b ist in der Wand des Einlaufabschnitts 12 eingeformt. Der Einlassanschluss 13 kommuniziert mit dem Innenraum des Körpers 11 durch diesen Einlauf 13b. Eine Unterkante des Einlaufs 13b schließt mit einer Oberseite des Balkons 20 ab oder liegt darüber.

Der umlaufende Balkonrand 21 des Balkons 20 ist nach unten abgerundet und mit einem oberen Ende des Zwischenabschnitts 14 verbunden. Der Zwischenabschnitt 14 ist ähnlich einem Kegelstumpfmantel aufgebaut, wobei er sich nach unten hin verjüngt. Da der Zwischenabschnitt 14 mit seinem oberen Ende mit dem Balkonrand 21 und somit mit dem sichelförmigen Balkon 20 verbunden ist, ist das obere Ende des Zwischenabschnitts 14 auch entsprechende sichelförmig ausgebildet. Hierzu zeigt Figur 3b einen grob schematischen Radialschnitt des Körpers 11 zur Erläuterung. Der Radialschnitt kann beispielsweise im Umlaufwinkel αB=90° nach Figur 6 liegen.

Aufgrund der von dem Umlaufwinkel α abhängigen Balkonbreite r(α) ist ein Abstand D von der Innenseite (z.B. wie in Figur 3a gezeigt am oberen Ende des Zwischenabschnitts 14) zu der Achse 10a ebenfalls abhängig von dem Umlaufwinkel α. In dem in Figur 3b gezeigten Beispiel ist der Abstand D1 kleiner als der gegenüberliegende Abstand D2. Dies ist durch die unterschiedliche Balkonbreite r(α) bedingt.

Weiterhin ist in Figur 3a eine zu der Schraubenlinie 12c parallele Schraubenlinie 12'c angedeutet, welche hier in der gedachten Mittellinie des Balkons 20 liegt.

Das untere Ende des Zwischenabschnitts 14 kann beispielsweise so ausgebildet sein, dass ein gleichmäßiger Abstand der Innenwände des Zwischenabschnitts 14 zur Achse 10a gebildet ist. Dies ist aber nicht zwingend notwendig.

An dem unteren Ende des Zwischenabschnitts 14 ist ein schalenartiger Sammelabschnitt 15 mit einem darunter angeordneten, flacheren Sammelabschnitt 15a angebracht.

Mittels der Sammelabschnitte 15 und 15a erfolgt eine Reduzierung der Öffnungsweite der Wandung des Körpers 11 dergestalt, dass eine Öffnungsweite des unteren Endes des unteren Sammelabschnitts 15a etwa der Hälfte einer Öffnungsweite des oberen Endes des oberen Sammelabschnitts 15 entspricht.

Der untere Sammelabschnitt 15a ist mit einem oberen Ende eines Bodenabschnitts 16 verbunden. Der Bodenabschnitt 16 geht an seinem unteren Ende in einen geschlossenen Bodenabschnitt 16a über.

An den unteren Sammelabschnitt 15a und den die Bodenabschnitte 16 und 16a ist der Auslass 17 derart angebracht, dass ein Auslassanschluss 17a des Auslasses 17 mit einer Auslaufachse 17b radial nach außen von dem Körper 11 hervorsteht. Die Auslaufachse 17b schneidet in einer gedachten Verlängerung die gegenüberliegende tangentiale Einlaufachse 13a in einem Winkel von etwa 65° bzw. 115°, wie in Figur 6 gezeigt ist.

In der Figur 3b ist ein Teil-Radialschnitt der Wand des Körpers 11 mit den einzelnen Abschnitten gezeigt. Der Begriff "nach außen" bedeutet von der Achse 10a weg weisend, wobei unter dem Begriff "nach innen" zu der Achse 10a hin weisend zu verstehen ist.

In der Reihenfolge von oben nach unten beginnt der gerade, aber mit leichter Schräge nach innen verlaufende Wandabschnitt 12a, an den sich der gerundete Übergangsabschnitt 12b anschließt. Die Rundung des Übertragungsabschnitts 12b wölbt sich nach außen. An den Übergangsabschnitt 12b, der mit seinem unteren Ende zu der Achse 10a weist, schließt sich ein gerader Abschnitt des Balkons 20 an. Der Balkon 20 ist hier leicht nach unten in den Innenraum des Körpers 11 geneigt. Der Balkonrand 21 ist nach unten abgerundet, wobei sich die Rundung nach innen wölbt, und ist mit dem geraden, aber auch mit leichter Schräge nach innen verlaufenden Zwischenabschnitt 14 verbunden.

Der Zwischenabschnitt 14 geht dann in den nach innen gerundeten, oberen Sammelabschnitt 15 über, an den sich der nach unten geneigte, im Wesentlichen gerade verlaufende untere Sammelabschnitt 15a anschließt. Die Rundung des oberen Sammelabschnitts 15 wölbt sich nach außen.

Schließlich schließen sich die Bodenabschnitte 16 und 16a in einer S-Form an, wobei sich der oberen Bodenabschnitt 16 nach innen wölbt und sich der untere Bodenabschnitt 16a nach außen wölbt.

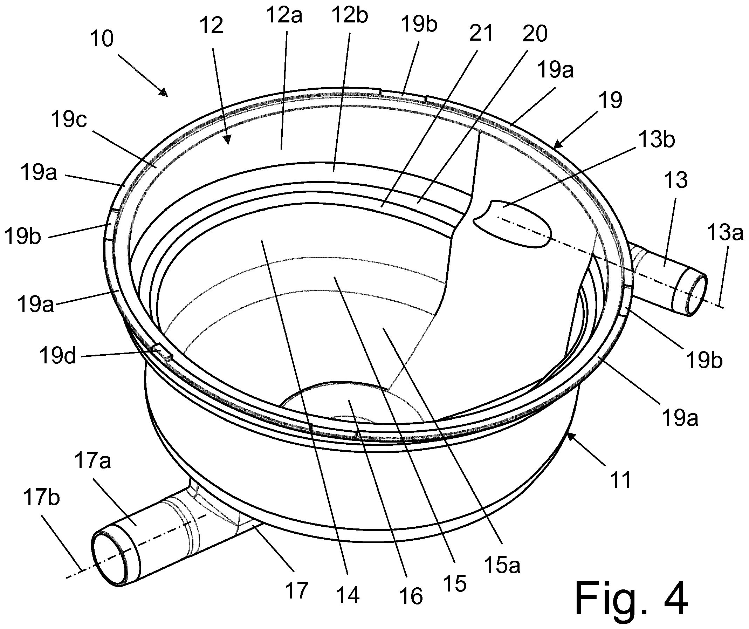

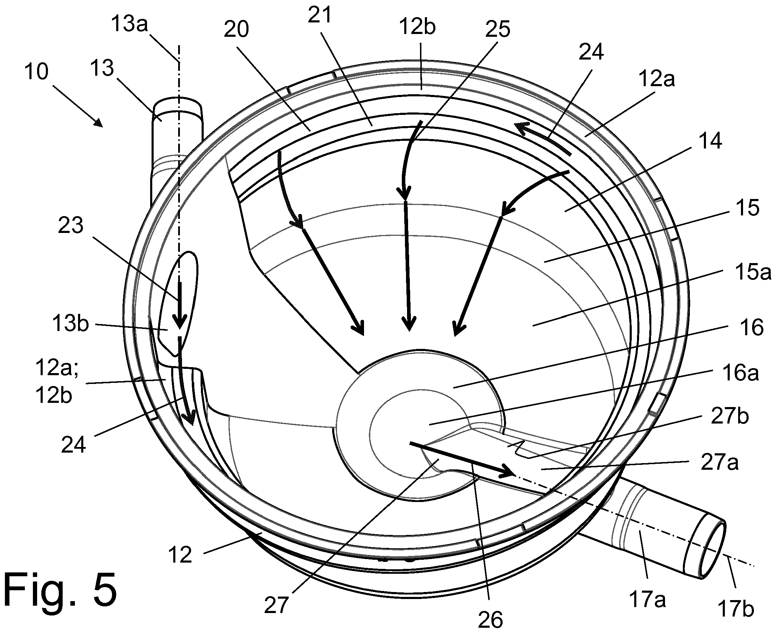

Figuren 4-5 zeigen schematische perspektivische Innenansichten des Körpers 11 nach Figur 2 und 3. Figur 4 zeigt eine Draufsicht auf den Körper 11 mit Darstellung des Flansches 19. In der Innenansicht der Figur 5 ist die Milchströmung vom Einlauf 13b bis in den Auslass 17 veranschaulicht.

Der Flansch 19 weist nach oben hervorstehende, auf dem Umfang der Oberseite des Flansches 19 regelmäßig angeordnete Stege auf. Zwischen den Stegen 19a sind am Umfang regelmäßig Ausnehmungen 19b eingeformt. Mindestens ein Vorsprung 19d ist auf einem der Stege 19a angebracht und steht von diesem Steg 19a nach oben hervor. Die Stege 19a und Ausnehmungen 19b bilden mit mit ihnen kommunizierenden, nicht gezeigten Stegen und Ausnehmungen eines Flansches 31 des Deckels 30 (siehe Figur 7 bis 9) einen Formschluss für den Deckel 30 in dessen aufgesetzter Stellung auf den Körper 11. Der Vorsprung 19d dient zur Zentrierung des Deckels 30 in Umfangsrichtung. Der Flansch 19 weist außerdem eine an seiner Innenseite angeordnete umlaufende Auflage 19c auf, auf welcher eine Dichtung 32 (siehe Figur 7) aufgebracht ist.

In Figur 5 sind die Verläufe der Milchströmungen bei Betrieb der Milchabscheidevorrichtung 10 gezeigt. Zur besseren Übersichtlichkeit ist der Deckel 30 in Figur 5 nicht dargestellt. Bei Betrieb ist er jedoch aufgebracht, wie in Figur 7 dargestellt ist.

Die Milchabscheidevorrichtung 10 ist über die Luftleitung 5b an der Vakuumleitung 5a (siehe Figur 1) angeschlossen und wird auf diese Weise bei Betrieb mit Vakuum beaufschlagt.

Aus dem an dem Einlassanschluss 13 angeschlossenem Melkzeug 2 strömt ein Milch-Luft-Gemisch in einer Einlaufströmung 23 tangential in Richtung der Einlaufachse 13a in den Körper 11 der Milchabscheidevorrichtung 10. Dabei verläuft die Einlaufströmung 23 durch den Einlauf 13b in der Wand des Einlassabschnitts 12 auf den Balkon 20. Dabei wird das Milch-Luft-Gemisch der Einlaufströmung 23 an dem Wandabschnitt 12a und dem Übergangsabschnitt 12b in eine Umfangsströmung 24 auf den Umfang bzw. Kreisbogen des Balkons 20 abgelenkt und verläuft weiter als die Umfangsströmung 24. Durch die dabei entstehenden Zentrifugalkräfte wird die Milch nach außen an den Wandabschnitt 12a und den Übergangsabschnitt 12b gedrückt und bleibt so weitestgehend auf dem Balkonabschnitt 18.

Da der Balkon 20 wie oben beschrieben mit dem Steigungswinkel 22 ansteigt, fließt das Milch-Luft-Gemisch als Umfangsströmung 24 entgegen der Schwerkraft, d.h. entgegen der wirkenden Erdanziehungskraft, "bergauf". Dabei nimmt die Fließgeschwindigkeit der Umfangsströmung 24 ab. Außerdem nimmt die Balkonbreite r(α) mit der Umfangslänge bzw. dem Umfangswinkel α ab. Dadurch fließt bei abnehmender Strömungsgeschwindigkeit ein Teil der Milch vom Balkon 20 über den Balkonrand 21 sanft an der Innenwand des Zwischenabschnitts 14 in den Sammelabschnitt 15 und schließlich in den Bodenabschnitt 16, in welchem die Milch gesammelt wird. Diese Strömungen sind hier als Abwärtsströmungen 25 bezeichnet.

Je mehr die Strömungsgeschwindigkeit der Umfangsströmung 24 der Milch auf dem Balkon 20 abnimmt und der Balkon 20 schmaler wird, umso mehr Milch fließt in Abwärtsströmungen 25 nach unten in die untenstehende Milch in den Bodenabschnitten 16, 16a und Sammelabschnitten 15, 15a ab.

Die ruhigen Abwärtsströmungen 25 mit geringer Strömungsgeschwindigkeit ermöglichen, dass sich die Milch in den Sammelabschnitten 15, 15a und Bodenabschnitten 16, 16a ohne Turbulenzen und ohne oder nur mit geringster Schaumbildung sammelt. Diese gesammelte Milch ist somit nicht mehr in einem solchen Bewegungszustand, welcher ein Schäumen verursacht. Zufließende Milch schießt nicht mit hoher Geschwindigkeit als Strahl in den Behälter mit gesammelter Milch, sondern fließt langsam in Teilmengen in die gesammelte Milch.

Bei Erreichen des Umfangswinkels αC (siehe Figur 6) bzw. nach Durchlauf des kompletten Umfangs von einem Umfangswinkel von etwa α=330° ist die gesamte Milch vom Balkon 20 abgelaufen. Die auf dem Endbereich des Balkonabschnitts 18 fließende Milch kann sich so nicht mit der durch den Einlauf 13b einströmenden Milch verwirbeln.

Auf diese Weise wird es gewährleistet, dass sich die durch den Einlauf 13b einströmende Milch nicht mit nachfolgender einströmender Milch verwirbelt.

Die Milchpumpe 7 (siehe Figur 1) pumpt immer nur die Milch ab, die sich in dem untersten Bereich des Körpers 11 in den Sammelabschnitten 15, 15a und Bodenabschnitten 16, 16a gesammelt hat. Dies ist hier ein geringes Volumen von beispielsweise 2 l. Das Abpumpen erfolgt gesteuert über einen Niveausensor 28 (siehe Figur 7), der sich in der Milchabscheidevorrichtung 10 befindet. Die Milch strömt dabei in einer Auslaufströmung 26 in einem Auslauf 27 durch eine Rinne 27a im Auslass 17 in Richtung der Auslaufachse 17b durch den Auslassanschluss 17a in die Milchzulaufleitung 7a zur Milchpumpe 7.

Der Auslauf 27 ist radial in dem unteren Sammelabschnitt 15b und den Bodenabschnitten 16, 16a eingeformt. Die Rinne 27a weist zur Führung der Auslaufströmung 26 Rinnenwände 27b auf.

Das obere Volumen der Milchabscheidevorrichtung 10, welches durch die Einlassabschnitt 12 gebildet wird, dient als ein Puffer für entstehenden Milchschaum.

Die Balkonbreite r(α) ist in Figur 6 beispielhaft für drei Umfangswinkel αA, αB und αC gezeigt. In diesem Beispiel sind der Übergangsabschnitt 12b, der Balkon 20 und der Balkonrand 21 mit in die Balkonbreite r(α) einbezogen.

Der Anfangswert αA des Umfangswinkels α ist hier nur beispielhaft gezeigt, um die Änderung der Balkonbreite r(α) über den Bereich des Umfangswinkels α zu erläutern. Selbstverständlich kann auch der Endwert αC des Umfangswinkels α einen größeren oder auch kleineren Wert als dargestellt einnehmen.

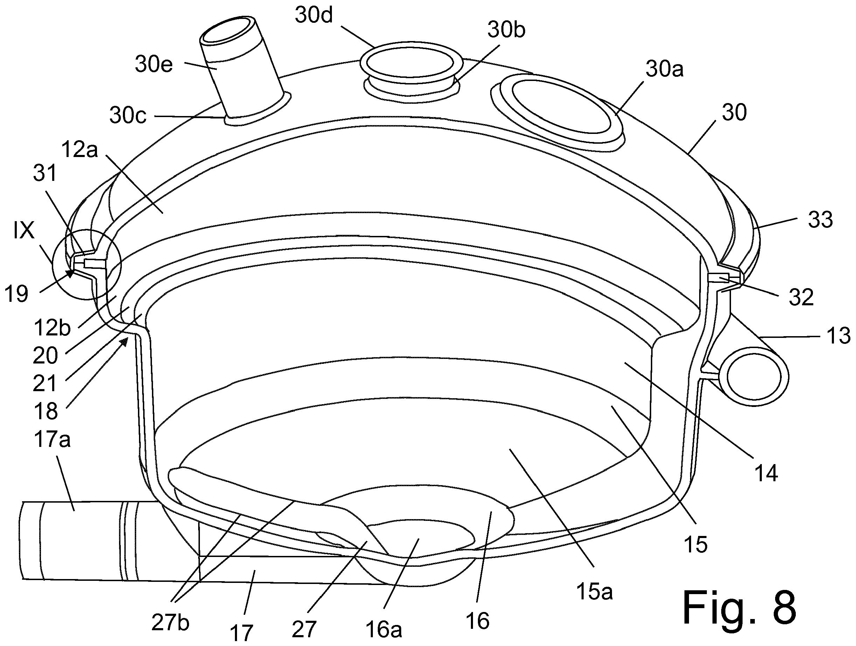

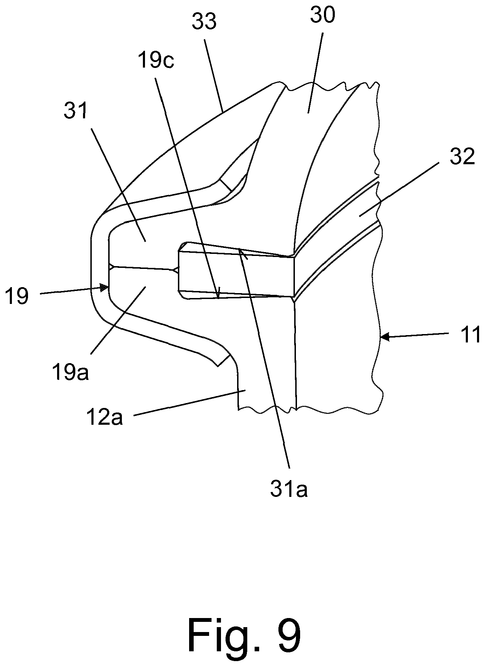

Figur 7 stellt eine schematische Schnittansicht der erfindungsgemäßen Milchabscheidevorrichtung 10 dar. In Figur 8 ist eine schematische Schnittansicht der erfindungsgemäßen Milchabscheidevorrichtung 10 nach Figur 7 um ca. 180° um die vertikale Achse 10a gedreht gezeigt. Figur 9 zeigt eine vergrößerte Darstellung des Bereichs IX aus Figur 8.

Der bereits oben erwähnte Deckel 30 ist in den Figuren 8 bis 9 auf dem Flansch 19 des Einlaufabschnitts 12 des Körpers 11 der Milchabscheidevorrichtung 10 aufgesetzt. Dabei ist der Flansch 31 des Deckels 30 auf dem Flansch 19 aufgesetzt und durch die Stege 19a in der korrekten Position relativ zu dem Körper 11 formschlüssig angeordnet. Zwischen der Auflage 19c des Flansches 19 des Körpers 11 und einer Aufnahme 31a des Flansches 31 des Deckels 30 ist eine umlaufende Dichtung 32 eingesetzt, welche den Körper 11 und den Deckel 30 gegen die Umgebung abdichtet. Die Flächen der Auflage 19c und der Aufnahme 31a sind jeweils leicht schräg zueinander ausgebildet, wobei ihre inneren Ränder näher als ihre äußeren Ränder beieinander liegen.

Ein nicht näher beschriebenes Schellenelement 33 oder Klemmenelement ist auf die Flansche 19 und 31 aufgebracht, wodurch eine dichte Verbindung des Deckels 30 über die Dichtung 32 mit dem Körper 11 hergestellt ist.

Der Deckel 30 weist eine haubenartige Ausbildung auf und ist hier mit drei Öffnungen 30a, 30b, 30c versehen.

Die erste Öffnung 30a des Deckels 30 dient zur Aufnahme eines Niveausensors 28, welcher unten näher beschrieben wird. Die zweite Öffnung 30b ist zentral im Deckel 30 angeordnet und mit einem Verbindungsflansch 30d für den Reinigungsanschluss 9 versehen, der hier nicht weiter behandelt wird. Die dritte Öffnung 30c weist einen Anschluss 30e für die Luftleitung 5b auf, über welche die Milchabscheidevorrichtung 10 mit Vakuum beaufschlagt wird.

Der Niveausensor 28 bildet eine Erfassungseinrichtung zur Erfassung eines Füllstands der in den Sammelabschnitten 15, 15a und Bodenabschnitten 16, 16a gesammelten Milch. Der Niveausensor 28 umfasst einen Stab 28a, einen Schwimmkörper 28b, ein Anschlusskabel 28c und eine Halterung 28d.

Der Niveausensor 28 ist so in dem Innenraum der Milchabscheidevorrichtung 10 angeordnet, dass der Stab 28a in einem Winkel im Bereich von etwa 20° zu der Achse 10a angeordnet ist. Der Schwimmkörper 28b ist hier eine Kugel, die auf dem Stab 28a in dessen Längsrichtung verschiebbar angeordnet ist und bei Füllstand "Null" im Zentrum zwischen dem unteren Sammelabschnitt 15a und dem Bodenabschnitt 16 liegt.

Der Stab 28a ist in der Halterung 28d befestigt und mit dieser in der Öffnung 30a des Deckels 30 dicht eingesetzt. Zusätzlich dient ein nicht näher beschriebenes, haubenartiges Schutzelement 29 zur Sicherung und Befestigung der Halterung 28d und des Stabes 28a.

Der auf dem Stab 28a verschieblich angeordnete Schwimmkörper 28b wirkt mit in dem Stab 28a befindlichen Erfassungsmitteln für die Position des Schwimmkörpers 28b an dem Stab 28a zusammen, um so einen elektrischen Wert für den Füllstand der abgeschiedenen, gesammelten Milch zu erzeugen.

Der Niveausensor 28 ist über sein Anschlusskabel 28d mit einer nicht gezeigten Steuereinrichtung verbunden, welche die Milchpumpe 7 derart steuert, dass die Milch in den Tank 8 befördert wird. Ein Antriebsmotor der Milchpumpe 7 ist über einen Frequenzumformer drehzahlgesteuert und kann somit einem Milchfluss, dessen maximaler Wert z.B. 10 bis 12 l/min beträgt, angepasst werden. Dabei ist sichergestellt, dass ein Füllstand der Milch in dem Körper 11 einen oberen Grenzwert nicht übersteigt und einen unteren Grenzwert nicht unterschreitet.

Die Milchabscheidevorrichtung ist vorzugsweise aus einem transparenten Material, z.B. ein geeigneter Kunststoff oder/und Glas, ausgebildet.

Die Erfindung wird durch das oben beschriebene Ausführungsbeispiel nicht eingeschränkt, sondern ist im Rahmen der beigefügten Ansprüche modifizierbar.

Der Umlaufwinkel α kann z.B. auch Werte im Bereich von 0° bis 180...270° aufweisen.

So ist es denkbar, dass der Niveausensor 28 z.B. als ein Füllstandsensor mit Ultraschallsensoren oder/und optischen Sensoren ausgebildet sein kann.

Der Niveausensor 28 kann auch zusätzliche Erfassungsmittel für Milchschaum aufweisen.

### Bezugszeichen

- 1: Melkanlage
- 2: Melkzeug
- 2a: Zitzenbecher
- 2b: Sammelstück
- 3: Melkleitung
- 3a: Melkschlauch
- 4: Vakuumerzeuger
- 5: Hauptvakuumleitung
- 5a: Vakuumleitung
- 5b: Luftleitung
- 6: Überlaufsicherungseinheit
- 7: Milchpumpe
- 7a: Milchzulaufleitung
- 7b: Milchdruckleitung
- 8: Milchtank
- 9: Reinigungsanschluss
- 10: Milchabscheidevorrichtung
- 10a: Achse
- 11: Körper
- 12: Einlaufabschnitt
- 12a: Wandabschnitt
- 12b: Übergangsabschnitt
- 12c, 12'c: Schraubenlinie
- 13: Einlassanschluss
- 13a: Einlaufachse
- 13b: Einlauf
- 14: Zwischenabschnitt
- 14a: Innenseite
- 15, 15a: Sammelabschnitt
- 16, 16a: Bodenabschnitt
- 17: Auslass
- 17a: Auslassanschluss
- 17b: Auslaufachse
- 18: Balkonabschnitt
- 19: Flansch
- 19a: Steg
- 19b: Ausnehmung
- 19c: Auflage
- 19d: Vorsprung
- 20: Balkon
- 21: Balkonrand
- 22: Steigungswinkel
- 23: Einlaufströmung
- 24: Umfangsströmung
- 25: Abwärtsströmung
- 26: Auslaufströmung
- 27: Auslauf
- 27a: Rinne
- 27b: Rinnenwand
- 28: Niveausensor
- 28a: Stab
- 28b: Schwimmkörper
- 28c: Anschlusskabel
- 28d: Halterung
- 29: Schutzelement
- 30: Deckel
- 30a, 30b, 30c: Öffnung
- 30d: Verbindungsflansch
- 30e: Anschluss
- 31: Flansch
- 31a: Aufnahme
- 32: Dichtung
- 33: Schellenelement
- α: Umlaufwinkel
- D1, D2: Abstand
- r(α): Balkonbreite

## Patentansprüche

1. Milchabscheidevorrichtung (10) für eine Melkanlage (1) zum Melken, insbesondere zum automatisierten Melken, von milchgebenden Tieren, aufweisend einen Körper (11) mit einem Einlassanschluss (13) und einem Auslassanschluss (17) und einen Deckel (30) mit einem Anschluss (30e) an eine Vakuumleitung (5a, 5b),
**dadurch gekennzeichnet, dass** der Körper (11) einen nach innen hervorstehenden Balkonabschnitt (18) an einem Innenumfang aufweist, wobei der Balkonabschnitt (18) umlaufend schraubenlinienförmig mit einem Steigungswinkel (22) gegen die Erdanziehungskraft ansteigend eine Rampe bildet, wobei die Milch gegen die Schwerkraft weiterfließt.

2. Milchabscheidevorrichtung (10) nach Anspruch 1, **dadurch gekennzeichnet, dass** der Balkonabschnitt (18) sichelförmig ausgebildet ist.

3. Milchabscheidevorrichtung (10) nach Anspruch 2, **dadurch gekennzeichnet, dass** der Balkonabschnitt (18) einen Übergangsabschnitt (12b), einen Balkon (20) als einen mittleren Abschnitt und einen Balkonrand (21) aufweist.

4. Milchabscheidevorrichtung (10) nach Anspruch 3, **dadurch gekennzeichnet, dass** eine Balkonbreite (r(α)) des Balkonabschnitts (18) in dem gegen die Erdanziehungskraft ansteigenden Verlauf des Balkonabschnitts (18) in Abhängigkeit eines Umfangswinkels (α) geringer wird.

5. Milchabscheidevorrichtung (10) nach Anspruch 4, **dadurch gekennzeichnet, dass** der Einlassanschluss (13) tangential an dem Körper (11) und tangential zu dem Balkonabschnitt (18) angebracht ist, wobei der Einlassanschluss (13) mit einem Innenraum des Körpers (11) durch einen Einlauf (13b) kommuniziert, wobei eine Unterkante des Einlaufs (13b) mit einer Oberseite des Balkons (20) abschließt oder darüber liegt.

6. Milchabscheidevorrichtung (10) nach Anspruch 5, **dadurch gekennzeichnet, dass** der Körper (11) eine zentrale Achse (10a) aufweist und einen Einlaufabschnitt (12) mit dem tangentialen Einlassanschluss (13), einen Zwischenabschnitt (14), einen Sammelabschnitt (15, 15a) und einen Bodenabschnitt (16, 16a) mit dem Auslassanschluss (17) umfasst.

7. Milchabscheidevorrichtung (10) nach Anspruch 6, **dadurch gekennzeichnet, dass** der Einlaufabschnitt (12) einen Wandabschnitt (12a) mit einem Flansch (19) zur Zusammenwirkung mit dem Deckel (30) und den Übergangsabschnitt (12b) aufweist.

8. Milchabscheidevorrichtung (10) nach einem der vorherigen Ansprüche, **dadurch gekennzeichnet, dass** die Milchabscheidevorrichtung (10) mit einem Niveausensor (28) zur Erfassung eines Füllstands von gesammelter abgeschiedener Milch ausgerüstet ist.

9. Milchabscheidevorrichtung (10) nach Anspruch 8, **dadurch gekennzeichnet, dass** der Niveausensor (28) in einem Winkel zu einer Achse (10a) der Milchabscheidevorrichtung (10) angeordnet ist, wobei dieser Winkel in einem Bereich von 10° bis 25°, bevorzugt 18° bis 22°, liegt.

10. Milchabscheidevorrichtung (10) nach Anspruch 8 oder 9, **dadurch gekennzeichnet, dass** der Niveausensor (28) in dem Deckel (30) befestigt ist.

11. Milchabscheidevorrichtung (10) nach einem der vorherigen Ansprüche, **dadurch gekennzeichnet, dass** der Steigungswinkel (22) einen konstanten Wert aufweist.

12. Milchabscheidevorrichtung (10) nach einem der Ansprüche 1 bis 10, **dadurch gekennzeichnet, dass** der Steigungswinkel (22) unterschiedliche Werte aufweist, die sich kontinuierlich oder in Stufen ändern.

13. Milchabscheidevorrichtung (10) nach einem der vorherigen Ansprüche, **dadurch gekennzeichnet, dass** die Milchabscheidevorrichtung (10) mit mindestens einem Reinigungsanschluss (9) versehen ist.

14. Milchabscheidevorrichtung (10) nach Anspruch 13, **dadurch gekennzeichnet, dass** der mindestens eine Reinigungsanschluss (9) in dem Deckel (30) angeordnet ist.

## Claims

1. A milk separation device (10) for a milking installation (1) for the milking, in particular for the automatic milking, of milk-producing animals, said milk separation device comprising a body (11) with an inlet connection (13) and an outlet connection (17) and a lid (30) with a connection (30e) to a vacuum line (5a, 5b),
**characterized in that** the body (11) comprises an inwardly protruding balcony portion (18) on an inner circumference, wherein the balcony portion (18) forms a ramp that ascends in a helical manner in the circumferential direction at a pitch angle (22) in opposition to the force of gravity, wherein the milk continuous to flow in opposition to the force of gravity.

2. The milk separation device (10) as claimed in claim 1, **characterized in that** the balcony portion (18) is realized is a crescent-shaped manner.

3. The milk separation device (10) as claimed in claim 2, **characterized in that** the balcony portion (18) comprises a transition portion (12b), a balcony (20) as a middle portion and a balcony edge (21).

4. The milk separation device (10) as claimed in claim 3, **characterized in that** a balcony width (r(α)) of the balcony portion (18) becomes smaller in dependence on a circumferential angle (α) in the ascending progression of the balcony portion (18) in opposition to the force of gravity.

5. The milk separation device (10) as claimed in claim 4, **characterized in that** the inlet connection (13) is mounted tangentially on the body (11) and tangentially to the balcony portion (18), wherein the inlet connection (13) communicates with an interior of the body (11) through an inflow (13b), wherein a lower edge of the inflow (13b) closes off with a top surface of the balcony (20) or lies above it.

6. The milk separation device (10) as claimed in claim 5, **characterized in that** the body (11) comprises a central axis (10a) and includes an inflow portion (12) with the tangential inlet connection (13), an intermediate portion (14), a collecting portion (15, 15a) and a bottom portion (16, 16a) with the outlet connection (17).

7. The milk separation device (10) as claimed in claim 6, **characterized in that** the inflow portion (12) comprises a wall portion (12a) with a flange (19) for interaction with the lid (30) and the transition portion (12b).

8. The milk separation device (10) as claimed in one of the preceding claims, **characterized in that** the milk separation device (10) is provided with a level sensor (28) for detecting a fill level of collected separated milk.

9. The milk separation device (10) as claimed in claim 8, **characterized in that** the level sensor (28) is arranged at an angle to an axis (10a) of the milk separation device (10), wherein said angle is within a range of between 10° and 25°, in a preferred manner between 18° and 22°.

10. The milk separation device (10) as claimed in claim 8 or 9, **characterized in that** the level sensor (28) is fastened in the lid (30).

11. The milk separation device (10) as claimed in one of the preceding claims, **characterized in that** the pitch angle (22) comprises a constant value.

12. The milk separation device (10) as claimed in one of claims 1 to 10, **characterized in that** the pitch angle (22) comprises different values which alter continuously or in steps.

13. The milk separation device (10) as claimed in one of the preceding claims, **characterized in that** the milk separation device (10) is provided with at least one cleaning connection (9).

14. The milk separation device (10) as claimed in claim 13, **characterized in that** the at least one cleaning connection (9) is arranged in the lid (30).

## Revendications

1. Dispositif de séparation de lait (10) pour une installation de traite (1) destinée à la traite, en particulier à la traite automatisée d'animaux producteurs de lait, présentant un corps (11) avec un raccord d'entrée (13) et un raccord de sortie (17) et un couvercle (30) avec un raccord (30e) vers une conduite de vide (5a, 5b), **caractérisé en ce que** le corps (11) présente une section formant un balcon (18) qui dépasse vers l'intérieur sur sa circonférence intérieure, la section formant un balcon (18) formant une rampe circonférentielle en hélice avec un angle d'inclinaison (22) opposé à l'attraction terrestre, de sorte que le lait s'écoule contre la gravité.

2. Dispositif de séparation de lait (10) selon la revendication 1, **caractérisé en ce que** la section formant un balcon (18) est en forme de faucille.

3. Dispositif de séparation de lait (10) selon la revendication 2, **caractérisé en ce que** la section formant un balcon (18) présente une section de transfert (12b), un balcon (20) formant une section médiane et un bord de balcon (21).

4. Dispositif de séparation de lait (10) selon la revendication 3, **caractérisé en ce que** la largeur de balcon (r(α)) de la section formant un balcon (18) diminue sur le tracé de la section formant un balcon (18) montant contre la force d'attraction terrestre en fonction d'un angle de circonférence (α).

5. Dispositif de séparation de lait (10) selon la revendication 4, **caractérisé en ce que** le raccord d'entrée (13) est posé de façon tangente sur le corps (11) et de façon tangente par rapport à la section formant un balcon (18), le raccord d'entrée (13) communiquant avec un espace intérieur du corps (11) à travers une entrée (13b), le bord inférieur de l'entrée (13b) s'achevant au niveau d'une face supérieure du balcon (20) ou se trouvant au-dessus.

6. Dispositif de séparation de lait (10) selon la revendication 5, **caractérisé en ce que** le corps (11) présente un axe central (10a) et comprend une section d'entrée (12) avec le raccord d'entrée (13) tangent, une section intermédiaire (14), une section de collecte (15, 15a) et une section de fond (16, 16a) avec le raccord de sortie (17).

7. Dispositif de séparation de lait (10) selon la revendication 6, **caractérisé en ce que** la section d'entrée (12) présente une section de paroi (12a) avec une bride (19) destinée à coopérer avec le couvercle (30) ainsi que la section de transfert (12b).

8. Dispositif de séparation de lait (10) selon l'une des revendications précédentes, **caractérisé en ce que** le dispositif de séparation de lait (10) est équipé d'un capteur de niveau (28) pour détecter un niveau de remplissage avec le lait séparé collecté.

9. Dispositif de séparation de lait (10) selon la revendication 8, **caractérisé en ce que** le capteur de niveau (28) est disposé selon un angle par rapport à un axe (10a) du dispositif de séparation de lait (10), lequel angle se situe dans une plage de 10° à 25°, de préférence de 18° à 22°.

10. Dispositif de séparation de lait (10) selon la revendication 8 ou 9, **caractérisé en ce que** le capteur de niveau (28) est fixé dans le couvercle (30).

11. Dispositif de séparation de lait (10) selon l'une des revendications précédentes, **caractérisé en ce que** l'angle de pente (22) présente une valeur constante.

12. Dispositif de séparation de lait (10) selon l'une des revendications 1 à 10, **caractérisé en ce que** l'angle de pente (22) présente différentes valeurs qui changent de façon continue ou par paliers.

13. Dispositif de séparation de lait (10) selon l'une des revendications précédentes, **caractérisé en ce que** le dispositif de séparation de lait (10) est muni d'au moins un raccord de nettoyage (9).

14. Dispositif de séparation de lait (10) selon la revendication 13, **caractérisé en ce que** l'au moins un raccord de nettoyage (9) est disposé dans le couvercle (30).
